# EUROPEAN PATENT SPECIFICATION

(11) **EP 4 482 205 B1**
(45) Date of publication and mention of the grant of the patent: **18.03.2026**
(21) Application number: 22926493.2
(22) Date of filing: 18.02.2022
(51) Int. Cl.: H04W 36/00, H04B 7/185, H04W 24/10, H04W 84/06

(54) **MEASUREMENT CONFIGURATION METHOD AND APPARATUS**
MESSKONFIGURATIONSVERFAHREN UND -VORRICHTUNG
PROCÉDÉ ET APPAREIL DE CONFIGURATION DE MESURE

(43) Date of publication of application: 25.12.2024
(73) Proprietor: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/076923
(87) International publication number: WO 2023/155166

(56) References cited:
- WO-A1-2020/145559
- WO-A1-2022/032676
- WO-A1-2022/032676
- CN-A- 111 565 428
- CN-A- 111 836 313
- US-A1- 2022 086 671

## Description

### TECHNICAL FIELD

The disclosure relates to a field of communication technologies, more particularly, to a measurement configuration method and a measurement configuration apparatus.

### BACKGROUND

A 5G new radio (NR) system introduces non-terrestrial networks (NTNs). In an NTN system, different types of satellites may be in different orbits, such as a geostationary earth orbiting (GEO) satellite, a low earth orbiting (LEO) satellite, and the like, and moving speeds relative to ground of the satellites in different orbits are different. Therefore, when a terminal in the NTN system establishes communication connections with the satellites in different orbits, time restrictions required by the terminal for measurement may be different. Measurement configurations are disclosed in US 2022/086671 A1 and WO 2022/032676 A1.

### SUMMARY

According a first aspect of the disclosure, a measurement configuration method is provided as defined by claim 1.

Optionally, obtaining the first scaling information corresponding to the non-terrestrial communication type of the terminal includes:
receiving the first scaling information sent by a network device.

Optionally, in response to the terminal being in an idle state or an inactive state, the first scaling information is carried in a system information block (SIB); or in response to the terminal being in a connected state, the first scaling information is carried in a radio resource control (RRC) signaling.

Optionally, the non-terrestrial communication type includes at least one of the following:
a medium earth orbiting (MEO) satellite, a medium earth orbiting (MEO) satellite, a scenario of a LEO satellite-based earth-moving serving cell, a scenario of a LEO satellite-based earth-fixed serving cell, or a high altitude platform station (HAPS).

Optionally, the target measurement includes at least one of the following:
a mobility management of the terminal, radio link monitoring (RLM), a radio resource management (RRM), or a beam management.

According a second aspect of the disclosure, a measurement configuration method is provided as defined by claim 6.

Optionally, in response to the terminal being in an idle state or an inactive state, the first scaling information is carried in a SIB; or in response to the terminal being in a connected state, the first scaling information is carried in an RRC signaling.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, or a HAPS.

Optionally, the target measurement includes at least one of the following:
a mobility management of the terminal, RLM, an RRM, or a beam management.

According a third aspect of the disclosure, a measurement configuration apparatus is provided as defined by claim 10.

Optionally, the processing unit is configured to:
receive the first scaling information sent by a network device.

Optionally, in response to the terminal being in an idle state or an inactive state, the first scaling information is carried in a SIB; or in response to the terminal being in a connected state, the first scaling information is carried in an RRC signaling.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, or a HAPS.

Optionally, the target measurement includes at least one of the following:
a mobility management of the terminal, RLM, an RRM, or a beam management.

According a fourth aspect of the disclosure, a measurement configuration apparatus is provided as defined by claim 12.

Optionally, in response to the terminal being in an idle state or an inactive state, the first scaling information is carried in a SIB; or in response to the terminal being in a connected state, the first scaling information is carried in an RRC signaling.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, or a HAPS.

Optionally, the target measurement includes at least one of the following:
a mobility management of the terminal, RLM, an RRM, or a beam management.

According to a further aspect of embodiments of the disclosure, a computer-readable storage medium is provided as defined by claim 13.

Additional aspects and advantages of the disclosure will be given in part in the following description, become apparent in part from the following descriptions, or be understood from the practice of the disclosure.

### BRIEF DESCRIPTION OF THE DRAWINGS

To describe technical solutions in embodiments of the disclosure or in the background technology more clearly, the following describes accompanying drawings used in embodiments the disclosure or the background technology.
FIG. 1 is a schematic diagram of an architecture of a communication system according to an embodiment of the disclosure.
FIG. 2 is a flowchart of a measurement configuration method according to an embodiment of the disclosure.
FIG. 3 is a flowchart of a measurement configuration method according to another embodiment of the disclosure.
FIG. 4 is a flowchart of a measurement configuration method according to another embodiment of the disclosure.
FIG. 5 is a flowchart of a measurement configuration method according to an embodiment of the disclosure.
FIG. 6 is a block diagram of a measurement configuration apparatus according to an embodiment of the disclosure.
FIG. 7 is a block diagram of a measurement configuration apparatus according to an embodiment of the disclosure.
FIG. 8 is a block diagram of a measurement configuration device according to another embodiment of the disclosure.
FIG. 9 is a block diagram of a chip according to an embodiment of the disclosure.

### DETAILED DESCRIPTION

Embodiments will be described in detail here, and examples thereof are shown in the accompanying drawings. When the following descriptions are referred to the accompanying drawings, unless otherwise indicated, the same numbers in different drawings represent the same or similar elements. The implementations described in the following embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit embodiments of the disclosure. The singular forms "a", "the", and "said" used in embodiments of the disclosure and the appended claims are also intended to include plural forms, unless the context clearly indicates other meanings. It should also be understood that the term "and/or" used in the disclosure means and includes any or all possible combinations of one or more associated listed items.

It should be understood that, although the terms "first", "second", "third", etc. may be used in embodiments of the disclosure to describe various information, such information shall not be limited to these terms. These terms are only used to distinguish the same type of information from each other. For example, without departing from the scope of embodiments of the disclosure, first information may also be referred to as second information, and similarly, and the second information may also be referred to as the first information. Depending on the context, for example, the word "if" as used herein may be interpreted as "while" or "when" or "in response to determining".

Embodiments of the disclosure are described in detail below, and examples of embodiments are illustrated in the accompanying drawings, in which the same or similar labels represent the same or similar elements. Embodiments described below with reference to the accompanying drawings are exemplary, and are intended to explain the disclosure, but should not be understood as a limitation to the disclosure.

In order to better understand the measurement configuration method disclosed in embodiments of the disclosure, the following describes a communication system to which embodiments of the disclosure are applicable.

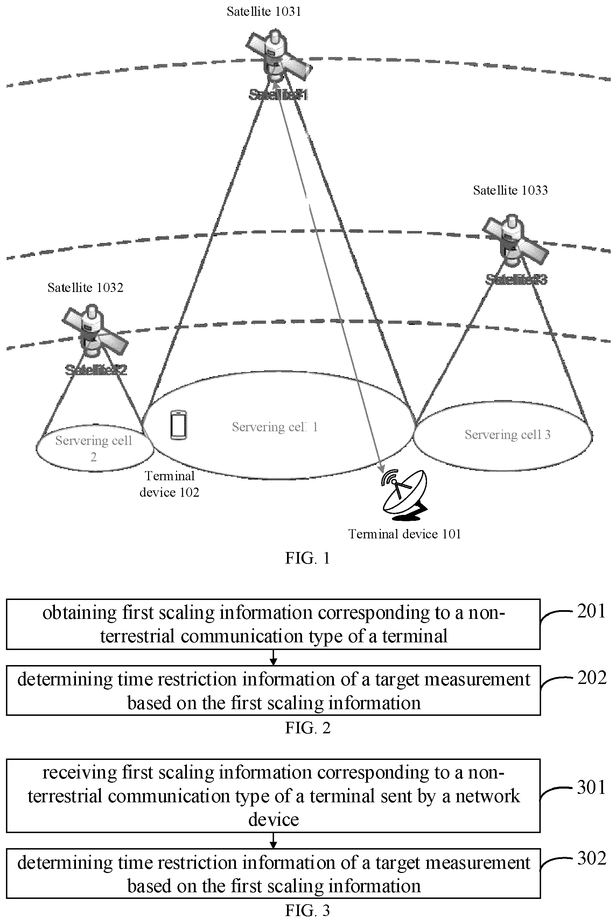

Referring to FIG. 1, FIG. 1 is a schematic diagram of an architecture of a communication system according to an embodiment of the disclosure. The communication system may include, but is not limited to, a network device, a terminal, and a satellite. The number and form of devices shown in FIG. 1 are merely used for example and do not constitute a limitation on embodiments of the disclosure. In actual application, the communication system may include two or more network devices, two or more terminals, and two or more satellites. As illustrated in FIG. 1, the communication system may include two network devices 101, one terminal 102, and three satellites 1031, 1032, and 1033.

It should be noted that the technical solutions of embodiments of the disclosure may be applied to various communication systems, such as a long term evolution (LTE) system, a 5th generation (5G) mobile communication system, a 5G new radio (NR) system, or another future new mobile communication system.

The network device 101 in embodiments of the disclosure is an entity used to transmit or receive a signal on a network side. For example, the network device 101 may be an evolved NodeB (eNB), a transmission reception point (TRP), a next generation NodeB (gNB) in an NR system, a base station in other future mobile communication system or an access node in a wireless fidelity (WiFi) system, and the like. Specific technologies and specific device forms used by the network device are not limited in embodiments of the disclosure. The network device provided in embodiments of the disclosure may be composed of a central unit (CU) and distributed units (DUs). The CU may also be referred to as a control unit. A structure of CU-DU may separate a protocol layer of the network device, such as the base station. Part of functions of the protocol layer are centrally controlled by the CU, and part or all of remaining functions of the protocol layer are distributed in the DUs. The DUs are centralized controlled by the CU.

The terminal 102 in embodiments of the disclosure is an entity used to receive or transmit a signal on a user side, such as a mobile phone. The terminal may also be referred to as a terminal device, a user equipment (UE), a mobile station (MS), a mobile terminal (MT), or the like. The terminal may be an automobile with a communication function, an intelligent automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Specific technologies and specific device forms used by the terminal are not limited in embodiments of the disclosure.

The 5G NR system introduces a non-terrestrial networks (NTN). In an NTN system, different types of satellites may be in different orbits. For example, in FIG. 1, the satellite 1031 is a geostationary earth orbiting (GEO) satellite, the satellite 1032 is a low earth orbiting (LEO) satellite, and the satellite 1033 is a medium earth orbiting (MEO) satellite or the like. Moving speeds relative to ground of satellites in different orbits are also different. For example, the GEO satellite 1031 is stationary relative to the ground, and a moving speed relative to the ground of the LEO satellite 1032 is 7.56 km/s.

Since the moving speeds relative to the ground of different satellites are different, when the terminal in the NTN system establishes communication connections with the satellites in different orbits, time restrictions required for performing radio resource management (RRM) and radio link monitoring (RLM) measurement by the terminal may also be different. For example, for a terminal 102 in a range of a serving cell covered by the GEO satellite 1031, since the GEO satellite 1031 is stationary relative to the ground, requirements for the RRM and RLM measurement may be relatively relaxed to save power of the terminal. For the terminal in a range of a serving cell covered by the LEO satellite 1032, since the LEO satellite 1032 moves faster relative to the ground, the requirements for the RRM and RLM measurements may be appropriately enhance and tighten.

It can be seen therefrom that in the NTN system, it is a need to study how to adapt the requirements for the RRM and RLM to different satellite types.

In embodiments of the disclosure, first scaling information corresponding to a non-terrestrial communication type of a terminal is obtained, and time restriction information of a target measurement is determined according to the first scaling information. A measurement requirements applicable adaptive to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

It may be understood that the communication system described in embodiments of the disclosure are intended to explain the technical solutions of embodiments of the disclosure more clearly, and does not constitute a limitation to the technical solutions provided in embodiments of the disclosure. The ordinary skill in the art may know that, with evolution of system architecture and emergence of new service scenarios, the technical solutions provided in embodiments of the disclosure are equally applied to similar technical issues.

The following describes in detail the measurement configuration method and the measurement configuration apparatus provided in the disclosure with reference to the accompanying drawings.

As shown in FIG. 2, FIG. 2 is a flowchart of a measurement configuration method according to an embodiment of the disclosure. It should be noted that the measurement configuration method in the embodiment of the disclosure is performed by a terminal. As shown in FIG. 2, the method may include the following steps.

At step 201, first scaling information corresponding to a non-terrestrial communication type of the terminal is obtained.

The first scaling information is used to determine time restriction information for a measurement of the terminal.

In embodiments of the disclosure, the terminal may obtain the first scaling information corresponding to the non-terrestrial communication type of the terminal, and may determine time restriction information of a target measurement based on the first scaling information.

The non-terrestrial communication type refers to a type of a non-terrestrial communication of a serving cell where the terminal is located, or a type of a non-terrestrial communication corresponding to a network device of the serving cell where the terminal is located.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, or a high altitude platform station (HAPS).

In some implementations, the terminal may receive the first scaling information sent by a network device.

The network device may send the first scaling information corresponding to the non-terrestrial communication type to the terminal based on a non-terrestrial communication type corresponding to the network device.

Optionally, a terminal in an idle state or an inactive state may obtain the first scaling information by receiving a system information block (SIB) that is broadcast by the network device and that carries the first scaling information.

The SIB is one of a series of system information blocks.

Optionally, a terminal in a connected state may obtain the first scaling information by receiving an radio resource control (RRC) signaling carrying the first scaling information sent by the network device.

In some implementations, the terminal may obtain first scaling information corresponding to the non-terrestrial communication type of the terminal according to a correspondence between at least one piece of scaling information and at least one non-terrestrial communication type agreed by a specification.

It may be understood that, in embodiments of the disclosure, different non-terrestrial communication types may correspond to different scaling information, to correspondingly scale a measurement requirement of the terminal. The terminal may obtain the first scaling information corresponding to the non-terrestrial communication type of the terminal, and determine the time restriction information for performing the target measurement corresponding to the non-terrestrial communication type of the terminal.

It should be noted that, in embodiments of the disclosure, correspondingly scaling the measurement requirement of the terminal refers to performing corresponding relaxation or tightening on the basis of a time restriction of the target measurement of the terminal in a current specification (for example, a time restriction of the target measurement of the terminal in a Rel-15 or Rel-16 version specification). In embodiments of the disclosure, the terminal may determine the time restriction information of the target measurement based on the first scaling information.

In addition, it should be noted that, in embodiments of the disclosure, the scaling information is a value greater than zero, and different non-terrestrial communication types may correspond to different scaling information. Based on a time restriction of the target measurement of the terminal in a current specification, the terminal may determine the time restriction information of the target measurement based on the scaling information corresponding to the non-terrestrial communication type of the terminal. In embodiments of the disclosure, in response to a value of the scaling information is greater than 1, it indicates that the terminal corresponding to the non-terrestrial communication type may relax the time restriction of the measurement; and in response to the value of the scaling information is less than 1, it indicates that the terminal corresponding to the non-terrestrial communication type may tighten the time restriction of the measurement. Therefore, the scaling information may also be referred to as a scaling factor.

At step 202, time restriction information of a target measurement is determined based on the first scaling information.

In embodiments of the disclosure, the terminal may determine the time restriction information of the target measurement based on the obtained first scaling information corresponding to the non-terrestrial communication type of the terminal.

The time restriction information refers to a duration required by the terminal to perform the target measurement, i.e., a duration required by the terminal to perform the target measurement to obtain a target measurement result.

Optionally, the target measurement includes at least one of the following:
a mobility management of the terminal, RLM, a RRM, or a beam management.

The mobility management of the terminal may include a mobility management under an idle state or an inactive state, such as serving cell reselection. Or, the mobility management of the terminal may include a mobility management under the connected state, such as, RRC reestablishment, RRC redirection, and the like.

The RRM may include an intra-frequency measurement, an inter-frequency measurement, and an inter-system measurement.

The beam management is a related process of the terminal in beam-level communication links. For example, the beam management may include an evaluation of a beam failure detection (BFD), an evaluation of a candidate beam detection (CBD), a beam failure recovery (BFR), and the like.

It may be understood that, in embodiments of the disclosure, the terminal may perform at least one of the above target measurement based on the measurement requirement of the terminal, and determine the time restriction information of the target measurement based on the obtained first scaling information.

In embodiments of the disclosure, the time restriction information of the at least one target measurement is determined based on the first scaling information. That is, a same scaling is performed on the measurement requirement of the at least one target measurement based on the first scaling information.

It may be understood that, in some implementations, different target measurements may correspond to different first scaling information. Different scaling information may be configured for different measurements, to perform pointed scaling for different measurements.

In conclusion, the first scaling information corresponding to the non-terrestrial communication type of the terminal is obtained, and the time restriction information of the target measurement is determined according to the first scaling information. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

Referring to FIG. 3, FIG. 3 is flowchart of a measurement configuration method according to an embodiment of the disclosure. It should be noted that the measurement configuration method in embodiments of the disclosure is performed by a terminal. As shown in FIG. 3, the method may include the following steps.

At step 301, first scaling information corresponding to a non-terrestrial communication type of the terminal sent by a network device is received.

In embodiments of the disclosure, the terminal may obtain the first scaling information corresponding to the non-terrestrial communication type of the terminal by receiving the first scaling information sent by the network device, to further determine time restriction information of a target measurement based on the first scaling information.

The non-terrestrial communication type refers to a type of a non-terrestrial communication of a serving cell where the terminal is located, or a type of a non-terrestrial communication corresponding to a network device of the serving cell where the terminal is located.

Optionally, the non-terrestrial communication type includes at least one of the following:
a GEO satellite, a medium earth orbiting (MEO) satellite, a scenario of a LEO satellite-based earth-moving serving cell, a scenario of a LEO satellite-based earth-fixed serving cell, or a high altitude platform station (HAPS).

The network device may send the first scaling information corresponding to the non-terrestrial communication type to the terminal based on the non-terrestrial communication type corresponding to the network device.

Optionally, a terminal in an idle state or an inactive state may obtain the first scaling information by receiving a SIB that is broadcast by the network device and that carries the first scaling information.

The SIB is one of a series of system information blocks.

Optionally, a terminal in a connected state may obtain the first scaling information by receiving an RRC signaling carrying the first scaling information sent by the network device.

It may be understood that, in embodiments of the disclosure, different non-terrestrial communication types may correspond to different scaling information, to correspondingly scale a measurement requirement of the terminal. The terminal may obtain the first scaling information corresponding to the non-terrestrial communication type of the terminal, and determine the time restriction information for performing the target measurement corresponding to the non-terrestrial communication type of the terminal.

It should be noted that, in embodiments of the disclosure, correspondingly scaling the measurement requirement of the terminal refers to performing corresponding relaxation or tightening on the basis of a time restriction of the target measurement of the terminal in a current specification (for example, a time restriction of the target measurement of the terminal in a Rel-15 or Rel-16 version specification).

At step 302, the time restriction information of the target measurement is determined based on the first scaling information.

In embodiments of the disclosure, the terminal may determine the time restriction information of the target measurement based on the obtained first scaling information corresponding to the non-terrestrial communication type of the terminal.

The time restriction information refers to a duration required by the terminal to perform the target measurement, i.e., a duration required by the terminal to perform the target measurement to obtain a target measurement result.

Optionally, the target measurement includes at least one of the following:
a mobility management of the terminal, RLM, a RRM, or a beam management.

The mobility management of the terminal may include a mobility management under an idle state or an inactive state, such as serving cell reselection. Or, the mobility management of the terminal may include a mobility management under the connected state, such as, RRC reestablishment, RRC redirection, and the like.

The RRM may include an intra-frequency measurement, an inter-frequency measurement, or an inter-system measurement.

The beam management is a related process of the terminal in beam-level communication links. For example, the beam management may include an evaluation of a BFD, an evaluation of a CBD, a BFR, and the like.

It may be understood that, in embodiments of the disclosure, the terminal may perform at least one of the above target measurement based on the measurement requirement of the terminal, and determine the time restriction information of the target measurement based on the obtained first scaling information.

In embodiments of the disclosure, the time restriction information of the at least one target measurement is determined based on the first scaling information. That is, a same scaling is performed on the measurement requirement of the at least one target measurement based on the first scaling information.

It may be understood that, in some implementations, different target measurements may correspond to different first scaling information. Different scaling information may be configured for different measurements, to perform pointed scaling for different measurements.

In an example, the terminal may receive the first scaling information X sent by the network device, and the first scaling information X corresponds to the non-terrestrial communication type of the terminal. Based on a time restriction T of the target measurement of the terminal in the current specification, the terminal may determine time restriction information T' = T*X of the target measurement based on the first scaling information X.

In embodiments of the disclosure, in response to a value of the scaling information is greater than 1, it indicates that the terminal corresponding to the non-terrestrial communication type may relax the time restriction of the measurement; and in response to the value of the scaling information is less than 1, it indicates that the terminal corresponding to the non-terrestrial communication type may tighten the time restriction of the measurement. Therefore, the scaling information may also be referred to as a scaling factor.

In conclusion, the first scaling information corresponding to the non-terrestrial communication type of the terminal sent by the network device is received, and the time restriction information of the target measurement is determined according to the first scaling information. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

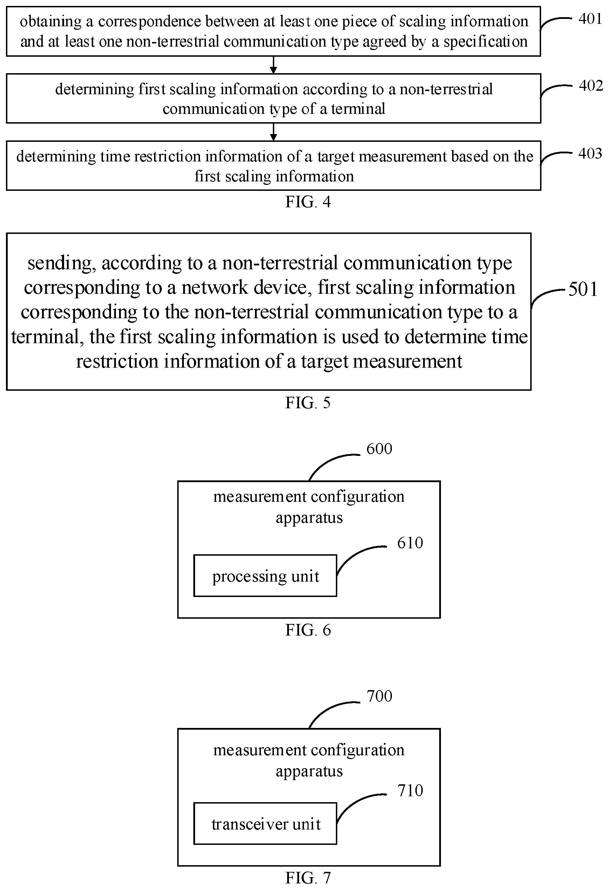

Referring to FIG. 4, FIG. 4 is flowchart of a measurement configuration method according to an embodiment of the disclosure. It should be noted that the measurement configuration method in the embodiment of the disclosure is performed by a terminal. As shown in FIG. 4, the method may include the following steps.

At step 401, a correspondence between at least one piece of scaling information and at least one non-terrestrial communication type agreed by a specification is obtained.

In embodiments of the disclosure, the terminal may obtain the correspondence between the at least one piece of scaling information and the at least one non-terrestrial communication type agreed by the specification, and may determine first scaling information corresponding to a non-terrestrial communication type of the terminal according to the correspondence.

The non-terrestrial communication type refers to a type of a non-terrestrial communication of a serving cell where the terminal is located, or a type of a non-terrestrial communication corresponding to a network device of the serving cell where the terminal is located.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, or a HAPS.

It may be understood that, in embodiments of the disclosure, different non-terrestrial communication types may correspond to different scaling information, to correspondingly scale a measurement requirement of the terminal. The terminal may obtain the first scaling information corresponding to the non-terrestrial communication type of the terminal, and determine time restriction information for performing a target measurement corresponding to the non-terrestrial communication type of the terminal.

It should be noted that, in embodiments of the disclosure, correspondingly scaling the measurement requirement of the terminal refers to performing corresponding relaxation or tightening on the basis of a time restriction of the target measurement of the terminal in a current specification (for example, a time restriction of the target measurement of the terminal in a Rel-15 or Rel-16 version specification), corresponding relaxation or tightening is performed.

In addition, it should be noted that, in embodiments of the disclosure, the scaling information may be a value greater than zero, and different non-terrestrial communication types may correspond to different scaling information. Based on the time restriction of the target measurement of the terminal in a current specification, the terminal may determine the time restriction information of the target measurement based on the scaling information corresponding to the non-terrestrial communication type of the terminal.

At step 402, the first scaling information is determined according to the non-terrestrial communication type of the terminal.

The terminal may obtain the correspondence between the at least one piece of scaling information and the at least one non-terrestrial communication type agreed by the specification, and determine the first scaling information corresponding to the non-terrestrial communication type of the terminal according to the correspondence.

At step 403, the time restriction information of the target measurement is determined based on the first scaling information.

In embodiments of the disclosure, the terminal may determine the time restriction information of the target measurement based on the obtained first scaling information corresponding to the non-terrestrial communication type of the terminal.

The time restriction information refers to a duration required by the terminal to perform the target measurement, i.e., a duration required by the terminal to perform the target measurement to obtain a target measurement result.

Optionally, the target measurement includes at least one of the following:
a mobility management of the terminal, RLM, a RRM, or a beam management.

The mobility management of the terminal may include a mobility management under an idle state or an inactive state, such as a serving cell reselection. Or, the mobility management of the terminal may include a mobility management under the connected state, such as, RRC reestablishment, RRC redirection, and the like.

The RRM may include an intra-frequency measurement, an inter-frequency measurement, or an inter-system measurement.

The beam management is a related process of the terminal in beam-level communication links. For example, the beam management may include an evaluation of a BFD, an evaluation of a CBD, a BFR, and the like.

It may be understood that, in embodiments of the disclosure, the terminal may perform at least one of the above target measurement based on a measurement requirement of the terminal, and determine the time restriction information of the target measurement based on the obtained first scaling information.

In embodiments of the disclosure, the time restriction information of the at least one target measurement is determined based on the first scaling information. That is, a same scaling is performed on the measurement requirement of the at least one target measurement based on the first scaling information.

It may be understood that, in some implementations, different target measurements may correspond to different first scaling information. Different scaling information may be configured for different measurements, to perform pointed scaling for different measurements.

In an example, the terminal may obtain the correspondence between the at least one piece of scaling information and the at least one non-terrestrial communication type agreed by the specification. For example, a first non-terrestrial communication type corresponds to scaling information X1, a second non-terrestrial communication type corresponds to scaling information X2 ... an N-th non-terrestrial communication type corresponds to scaling information Xn, where X1, X2 ... Xn are values greater than zero. The terminal may determine the first scaling information corresponding to the non-terrestrial communication type based on the non-terrestrial communication type of the terminal. For example, the terminal determines that the corresponding first scaling information is X1 based on that the non-terrestrial communication type of the terminal is the first non-terrestrial communication type. Based on the time restriction T of the target measurement of the terminal in the current specification, the terminal may determine time restriction information T'= T*X1 of the target measurement based on the first scaling information X1.

In embodiments of the disclosure, in response to a value of the scaling information is greater than 1, it indicates that the terminal corresponding to the non-terrestrial communication type may relax the time restriction of the measurement; and in response to the value of the scaling information is less than 1, it indicates that the terminal corresponding to the non-terrestrial communication type may tighten the time restriction of the measurement. Therefore, the scaling information may also be referred to as a scaling factor.

In conclusion, the correspondence between at least one piece of scaling information and at least one non-terrestrial communication type agreed by a specification is obtained, the first scaling information is determined according to the non-terrestrial communication type of the terminal, and the time restriction information of the target measurement is determined according to the first scaling information. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

Referring to FIG. 5, FIG. 5 is flowchart of a measurement configuration method according to an embodiment of the disclosure. It should be noted that the measurement configuration method in the embodiment of the disclosure is performed by a network device. As shown in FIG. 5, the method may include the following steps.

At step 501, according to a non-terrestrial communication type corresponding to the network device, first scaling information corresponding to the non-terrestrial communication type is sent to a terminal, the first scaling information is used to determine time restriction information of a target measurement.

In embodiments of the disclosure, the network device may send, based on the non-terrestrial communication type corresponding to the network device, the first scaling information corresponding to the non-terrestrial communication type to the terminal.

As described above, the non-terrestrial communication type refers to a type of a non-terrestrial communication of a serving cell where the terminal is located, or a type of a non-terrestrial communication corresponding to the network device of the serving cell where the terminal is located.

Optionally, the non-terrestrial communication type includes at least one of the following:
a GEO satellite, a MEO satellite, a scenario of a LEO satellite-based earth-moving serving cell, a scenario of a LEO satellite-based earth-fixed serving cell, and a HAPS.

The network device may send, based on the non-terrestrial communication type corresponding to the network device, the first scaling information corresponding to the non-terrestrial communication type to the terminal.

Optionally, the network device may send the first scaling information to a terminal in an idle state or an inactive state by sending a SIB that carries the first scaling information.

The SIB is one of a series of system information blocks.

Optionally, the network device may send the first scaling information to a terminal in a connected state by sending an RRC signaling carrying the first scaling information.

It may be understood that, in embodiments of the disclosure, different non-terrestrial communication types may correspond to different scaling information, to correspondingly scale a measurement requirement of the terminal. The terminal may obtain the first scaling information corresponding to the non-terrestrial communication type of the terminal, and determine time restriction information for performing the target measurement corresponding to the non-terrestrial communication type of the terminal.

It should be noted that, in embodiments of the disclosure, correspondingly scaling the measurement requirement of the terminal refers to performing corresponding relaxation or tightening on the basis of a time restriction of the target measurement of the terminal in a current specification (for example, a time restriction of the target measurement of the terminal in a Rel-15 or Rel-16 version specification).

In embodiments of the disclosure, the first scaling information is used to determine the time limit information of the target measurement. The terminal may determine the time limit information of the target measurement based on the first scaling information.

The time restriction information refers to a duration required by the terminal to perform the target measurement, i.e., a duration required by the terminal to perform the target measurement to obtain a target measurement result.

Optionally, the target measurement includes at least one of the following:
a mobility management of the terminal, RLM, a RRM, or a beam management.

The mobility management of the terminal may include a mobility management under an idle state or an inactive state, such as serving cell reselection. Or, the mobility management of the terminal may include a mobility management under the connected state, such as, RRC reestablishment, RRC redirection, and the like.

The RRM may include an intra-frequency measurement, an inter-frequency measurement, and an inter-system measurement.

The beam management is a related process of the terminal in beam-level communication links. For example, the beam management may include an evaluation of a BFD, an evaluation of a CBD, a BFR, and the like may be included.

It may be understood that, in embodiments of the disclosure, the terminal may perform at least one of the above target measurement based on a measurement requirement of the terminal, and determine the time restriction information of the target measurement based on the obtained first scaling information.

In embodiments of the disclosure, the time restriction information of the at least one target measurement is determined based on the first scaling information. That is, a same scaling is performed on the measurement requirement of the at least one target measurement based on the first scaling information.

It may be understood that, in some implementations, different target measurements may correspond to different first scaling information. Different scaling information may be configured for different measurements, to perform pointed scaling for different measurements.

In addition, it should be noted that, in embodiments of the disclosure, the scaling information is a value greater than zero, and different non-terrestrial communication types may correspond to different scaling information. Based on a time restriction of the target measurement of the terminal in a current specification, the terminal may determine the time restriction information of the target measurement based on the scaling information corresponding to the non-terrestrial communication type of the terminal. In embodiments of the disclosure, in response to a value of the scaling information being greater than 1, it indicates that the terminal corresponding to the non-terrestrial communication type may relax the time restriction of the measurement; and in response to the value of the scaling information being less than 1, it indicates that the terminal corresponding to the non-terrestrial communication type may tighten the time restriction of the measurement. Therefore, the scaling information may also be referred to as a scaling factor.

That is, in embodiments of the disclosure, in response to the value of the first scaling information sent by the network device to the terminal being greater than 1, the first scaling information is used by the terminal to determine, under the non-terrestrial communication type of the terminal, to relax the time restriction of the target measurement based on the time restriction of the target measurement of the terminal in the current specification; in response to the value of the first scaling information sent by the network device to the terminal being less than 1, the first scaling information is used by the terminal to determine, under the non-terrestrial communication type of the terminal, to tighten the time restriction of the target measurement based on the time restriction of the target measurement of the terminal in the current specification.

In conclusion, according to the non-terrestrial communication type corresponding to the network device, the first scaling information corresponding to the non-terrestrial communication type is sent to the terminal, and the first scaling information is used to determine the time restriction information of the target measurement. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

Corresponding to the measurement configuration methods provided in the above embodiments, the disclosure further provides a measurement configuration apparatus. The measurement configuration apparatus provided in embodiments of the disclosure corresponds to the method provided in the several foregoing embodiments, thus implementations of the measurement configuration method are also applicable to the measurement configuration apparatus provided in following embodiments, which are not described in detail in the following embodiments.

Referring to FIG. 6, FIG. 6 is a block diagram of a measurement configuration apparatus according to an embodiment of the disclosure. It should be noted that the measurement configuration apparatus is applied to a terminal.

As shown in FIG. 6, the measurement configuration apparatus 600 includes: a processing unit 610.

The processing unit 610 is configured to obtain first scaling information corresponding to a non-terrestrial communication type of the terminal.

The processing unit 610 is further configured to determine time restriction information of a target measurement based on the first scaling information.

In a possible implementation, the processing unit 610 is configured to: receive the first scaling information sent by a network device.

In a possible implementation, the processing unit 610 is configured to: obtain a correspondence between at least one piece of scaling information and at least one non-terrestrial communication type agreed by a specification; and determine the first scaling information according to the non-terrestrial communication type of the terminal.

In a possible implementation, in response to the terminal being in an idle state or an inactive state, the first scaling information is carried in a SIB; or in response to the terminal being in a connected state, the first scaling information is carried in an RRC signaling.

In a possible implementation, the non-terrestrial communication type includes at least one of the following:
a GEO satellite, a MEO satellite, a scenario of a LEO satellite-based earth-moving serving cell, a scenario of a LEO based satellite-earth-fixed serving cell, or a HAPS.

In a possible implementation, the target measurement includes at least one of the following:
a mobility management of the terminal, RLM, a RRM, or a beam management.

In embodiments of the disclosure, a measurement configuration apparatus obtains the first scaling information corresponding to the non-terrestrial communication type of the terminal, and determines the time restriction information of the target measurement according to the first scaling information. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

Referring to FIG. 7, FIG. 7 is a block diagram of a measurement configuration apparatus according to an embodiment of the disclosure.

As shown in FIG. 7, the measurement configuration apparatus 700 includes: a transceiver unit 710.

The transceiver unit 710 is configured to send, according to a non-terrestrial communication type corresponding to a network device, first scaling information corresponding to the non-terrestrial communication type to a terminal, the first scaling information is used to determine time restriction information of a target measurement.

In a possible implementation, in response to the terminal being in an idle state or an inactive state, the first scaling information is carried in a SIB; or in response to the terminal being in a connected state, the first scaling information is carried in an RRC signaling.

In a possible implementation, the non-terrestrial communication type includes at least one of the following:
a GEO satellite, a MEO satellite, a scenario of a LEO satellite-based earth-moving serving cell, a scenario of a LEO satellite-based earth-fixed serving cell, or a HAPS.

In a possible implementation, the target measurement includes at least one of the following:
a mobility management of the terminal, RLM, a RRM, or a beam management.

With the measurement configuration apparatus according to the embodiments, the first scaling information corresponding to the non-terrestrial communication type is sent to the terminal according to the non-terrestrial communication type corresponding to the network device, and the first scaling information is used to determine the time restriction information of the target measurement. Measurement requirements applicable to the terminal may be determined according to different non-terrestrial communication types, which correspondingly expands the measurement requirement of the terminal, effectively improves measurement accuracy of the terminal in a non-terrestrial network communication scenario, improves an endurance capability of the terminal, and improves communication efficiency.

In order to implement the foregoing embodiments, an embodiment of the disclosure further provides a communication device, including a processor and a memory, in which the memory stores a computer program, and the processor executes the computer program stored in the memory, so that the device performs the methods of embodiments shown in FIGS. 2 to 4.

In order to implement the foregoing embodiments, an embodiment of the disclosure further provides a communication device, including a processor and a memory, in which the memory stores a computer program, and the processor executes the computer program stored in the memory, so that the device performs the methods of embodiments shown in FIG. 5.

In order to implement the foregoing embodiments, an embodiment of the disclosure further provides a communications device, including a processor and an interface circuit, in which the interface circuit is configured to receive code instructions and transmit the code instructions to the processor, and the processor is configured to run the code instructions to perform the methods of embodiments shown in FIGS. 2 to 4.

In order to implement the foregoing embodiments, an embodiment of the disclosure further provides a communications device, including a processor and an interface circuit, in which the interface circuit is configured to receive code instructions and transmit the code instructions to the processor, and the processor is configured to run the code instructions to perform the methods of embodiments shown in FIGS. 5.

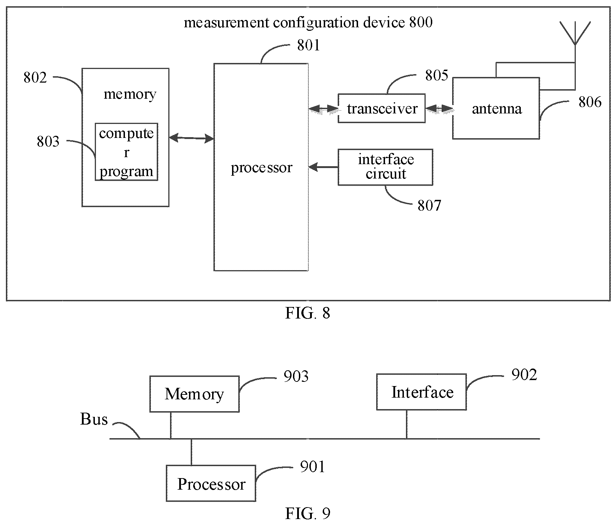

Referring to FIG. 8, FIG. 8 is a block diagram of a measurement configuration device according to an embodiment of the disclosure. The measurement configuration device 800 may be a network device, or may be a terminal, or may be a chip, a chip system, or a processor that supports the network device to implement the above methods, or may be a chip, a chip system, or a processor that supports the terminal to implement the above methods. The device may be used to implement the methods described in the foregoing method embodiments, which may refer to the description in the foregoing method embodiments.

The measurement configuration device 800 may include one or more processors 801. The processor 801 may be a general-purpose processor or a dedicated processor or the like. For example, it may be a baseband processor or a central processing unit. The baseband processor may be configured to process a communication protocol and communication data, and the central processing unit may be configured to control the measurement configuration device (for example, a base station, a baseband chip, a terminal, a terminal chip, a DU, or a CU), execute a computer program, and process data of the computer program.

Optionally, the measurement configuration device 800 may further include one or more memories 802 on which a computer program 803 may be stored, and the processor 801 executes the computer program 803, so that the measurement configuration device 800 executes the method described in the foregoing method embodiments. The computer program 803 may be solidified in the processor 801, and in this case, the processor 801 may be implemented by hardware.

Optionally, the memory 802 may further store data. The measurement configuration device 800 and the memory 802 may be separately disposed, or may be integrated together.

Optionally, the measurement configuration device 800 may further include a transceiver 805 and an antenna 806. The transceiver 805 may be referred to as a transceiver unit, a transceiver, or a transceiver circuit, and is configured to implement a transceiver function. The transceiver 805 may include a receiver and a transmitter, and the receiver may be referred to as a receiver or a receiving circuit, for implementing a receiving function; and the transmitter may be referred to as a transmitter or a transmitting circuit, for implementing a transmitting function.

Optionally, the measurement configuration device 800 may further include one or more interface circuits 807. The interface circuit 807 is configured to receive code instructions and transmit the code instructions to the processor 801. The processor 801 runs the code instructions to cause the measurement configuration device 800 to perform the methods described in the foregoing method embodiments.

In an implementation, the processor 801 may include a transceiver for implementing a receiving and transmitting function. For example, the transceiver may be a transceiver circuit, an interface, or an interface circuit. The transceiver circuit, the interface, or the interface circuit for implementing the receiving and transmitting functions may be separate or integrated together. The transceiver circuit, the interface, or the interface circuit may be used for reading and writing code/data, or the transceiver circuit, the interface, or the interface circuit may be used for signal transmission or delivery.

In an implementation, the measurement configuration device 800 may include a circuit, and the circuit may implement a function of sending, receiving or communicating in the foregoing method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The measurement configuration apparatus in the foregoing embodiment description may be a network device or a terminal, but the scope of the measurement configuration apparatus described in the disclosure is not limited thereto, and the structure of the apparatus for configuring the measurement may not be limited by FIGS. 6 to 7. The measurement configuration apparatus may be a stand-alone device or may be part of a larger device. For example, the measurement configuration apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) Others.

The case where the measurement configuration apparatus may be a chip or a chip system is described with reference to the schematic structure of a chip shown in FIG. 9. A chip shown in FIG. 9 includes a processor 901 and an interface 902. There may be one or more processors 901, and there may be more than one interface 902.

In the case that the chip is configured to implement a function of the network device in embodiments of the disclosure,
the interface 902 is configured to receive code instructions and transmit the code instructions to the processor; and
the processor 901 is configured to run the code instructions to perform the methods as shown in FIGS. 1 to 4.

In the case that a chip is configured to implement a function of the terminal in embodiments of the disclosure,
the interface 902 is configured to receive code instructions and transmit the code instructions to the processor; and
the processor 901 is configured to run the code instructions to perform the method as shown in FIG. 5.

Alternatively, the chip further includes a memory 903, and the memory 903 is configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of embodiments of the disclosure.

Embodiments of the disclosure further provide a communication system. The system includes the measurement configuration apparatus serving as a terminal and the measurement configuration apparatus serving as a network device in the foregoing embodiment in FIGS. 6-7, or the system includes a measurement configuration device serving as a network device and a measurement configuration device serving as a terminal in the foregoing embodiment in FIG. 8.

The disclosure further provides a readable storage medium having stored thereon instructions that, when executed by a computer, implement the functions of any of the foregoing method embodiments.

The disclosure further provides a computer program product that, when executed by a computer, implements the functions of any of the foregoing method embodiments.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer programs on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondence shown in tables in the disclosure may be configured, or may be predefined. Values of information in each table are merely examples, and may be configured as other values, which is not limited in the disclosure. When a correspondence between the information and various parameters is configured, it is not necessary to configure all correspondences shown in the tables. For example, in the tables in the disclosure, some correspondences shown in some rows may also be not configured. For another example, appropriate deformation adjustments may be performed based on the foregoing tables, such as splitting, merging, and the like. Names of titles shown in the foregoing tables may also use other names that may be understood by the communication device, and values or representations of the parameters may also be other values or representations that may be understood by the communication device. When the foregoing tables are implemented, other data structures may be used. For example, an array, a queue, a container, a stack, a linear table, a pointer, a linked list, a tree, a graph, a structure, a class, a heap, a hash table, a hash table and the like may be used.

The term "predefine" in this disclosure may be understood as define, pre-define, store, pre-store, pre-negotiate, pre-configure, solidify, or pre-fire.

Those skilled in the art may realize that the units and steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

Those skilled in the art may clearly understand that, for the convenience and brevity of description, the specific working processes of the described systems, apparatuses, and units may refer to corresponding processes in the above method embodiments, and details are not described herein again.

It should be understood that, various forms of procedures shown above may be configured to reorder, add or delete steps. For example, steps described in embodiments of the disclosure may be executed in parallel, sequentially, or in a different order, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the disclosure shall be included within the protection scope of embodiments of the disclosure. The invention is defined by the appended claims.

## Claims

1. A measurement configuration method, performed by a terminal (102), comprising:
obtaining (201), from a network device (101),
first scaling information corresponding to a non-terrestrial communication type of the terminal; and
determining (202) time restriction information of a target measurement based on the first scaling information; and **characterized in that**:
obtaining (201) the first scaling information corresponding to the non-terrestrial communication type of the terminal comprises:
obtaining (401) a correspondence between at least one piece of scaling information and at least one non-terrestrial communication type agreed by a specification; and
determining (402) the first scaling information according to the non-terrestrial communication type of the terminal.

2. The method of claim 1, wherein obtaining the first scaling information corresponding to the non-terrestrial communication type of the terminal comprises:
receiving (301) the first scaling information sent by a network device (101).

3. The method of claim 2, wherein in response to the terminal being in an idle state or an inactive state, the first scaling information is carried in a system information block, SIB; or in response to the terminal being in a connected state, the first scaling information is carried in a radio resource control, RRC, signaling.

4. The method of any of claims 2 or 3, wherein the non-terrestrial communication type comprises at least one of:
a geostationary earth orbiting, GEO, satellite (1031), a medium earth orbiting, MEO, satellite (1033), a scenario of a low earth orbiting, LEO, satellite-based earth-moving serving cell, a scenario of LEO satellite-based earth-fixed serving cell, or a high altitude platform station, HAPS.

5. The method of any claims 1 to 4, wherein the target measurement comprises at least one of:
a mobility management of the terminal (102), radio link monitoring, RLM, a radio resource management, RRM, or a beam management.

6. A measurement configuration method, performed by a network device (101), comprising:
sending (501), according to a non-terrestrial communication type corresponding to the network device (101), first scaling information corresponding to the non-terrestrial communication type to a terminal (102), wherein the first scaling information is used to determine time restriction information of a target measurement; **characterised in that**:
sending (501) the first scaling information corresponding to the non-terrestrial communication type to the terminal (102), comprises:
sending a correspondence between at least one piece of scaling information and at least one non-terrestrial communication type agreed by a specification, in order for the terminal to determine the first scaling information according to the non-terrestrial communication type of the terminal.

7. The method of claim 6, wherein in response to the terminal being in an idle state or an inactive state, the first scaling information is carried in a system information block, SIB; or in response to the terminal being in a connected state, the first scaling information is carried in a radio resource control, RRC, signaling.

8. The method of claim 6 or 7, wherein the non-terrestrial communication type comprises at least one of:
a geostationary earth orbiting, GEO, satellite (1031), a medium earth orbiting, MEO, satellite (1033), a scenario of a low earth orbiting, LEO, satellite-based earth-moving serving cell-, a scenario of a LEO satellite-based earth-fixed serving cell, or a high altitude platform station, HAPS.

9. The method of any one of claims 6 to 8, wherein the target measurement comprises at least one of:
a mobility management of the terminal, radio link monitoring, RLM, a radio resource management, RRM, or a beam management.

10. A measurement configuration apparatus (600), applied to a terminal, comprising:
a processing unit (610), configured to obtain first scaling information corresponding to a non-terrestrial communication type of the terminal;
and further to determine time restriction information of a target measurement based on the first scaling information; **characterised in that**:
the processing unit (610) is further configured to:
obtain a correspondence between at least one piece of scaling information and at least one non-terrestrial communication type agreed by a specification; and
determine the first scaling information according to the non-terrestrial communication type of the terminal.

11. The apparatus (600) of claim 10, wherein the processing unit (610) is configured to: receive the first scaling information sent by a network device.

12. A measurement configuration apparatus (700), applied to a network device (101), comprising:
a transceiver unit (710), configured to send, according to a non-terrestrial communication type corresponding to the network device, first scaling information corresponding to the non-terrestrial communication type to a terminal, wherein the first scaling information is used to determine time restriction information of a target measurement; **characterised in that**:
the transceiver unit (710) is further configured to: send a correspondence between at least one piece of scaling information and at least one non-terrestrial communication type agreed by a specification, in order for the terminal to determine the first scaling information according to the non-terrestrial communication type of the terminal.

13. A computer-readable storage medium storing computer instructions, wherein when the instructions are executed, the method of any one of claims 1 to 5 or the method of any one of claims 6 to 9 is implemented.

## Patentansprüche

1. Messkonfigurationsverfahren, durchgeführt von einem Endgerät (102), umfassend:
Erhalten (201) von ersten Skalierungsinformationen, die einem nicht-terrestrischen Kommunikationstyp des Endgeräts entsprechen, von einer Netzwerkvorrichtung (101); und
Bestimmen (202) von Zeitbeschränkungsinformationen einer Zielmessung basierend auf den ersten Skalierungsinformationen; **dadurch gekennzeichnet, dass**
das Erhalten (201) der ersten Skalierungsinformationen, die dem nicht-terrestrischen Kommunikationstyp des Endgeräts entsprechen, umfasst:
Erhalten (401) einer Entsprechung zwischen mindestens einer Skalierungsinformation und mindestens einem nicht-terrestrischen Kommunikationstyp, die durch eine Spezifikation vereinbart ist; und
Bestimmen (402) der ersten Skalierungsinformationen gemäß dem nicht-terrestrischen Kommunikationstyp des Endgeräts.

2. Verfahren nach Anspruch 1, wobei das Erhalten der ersten Skalierungsinformationen, die dem nicht-terrestrischen Kommunikationstyp des Endgeräts entsprechen, umfasst:
Empfangen (301) der von einer Netzwerkvorrichtung (101) gesendeten ersten Skalierungsinformationen.

3. Verfahren nach Anspruch 2, wobei die ersten Skalierungsinformationen in einem Systeminformationsblock, SIB, getragen werden, wenn sich das Endgerät in einem Leerlaufzustand oder einem inaktiven Zustand befindet; oder die ersten Skalierungsinformationen in einer Funkressourcensteuerungs-, RRC-, Signalisierung getragen werden, wenn sich das Endgerät in einem verbundenen Zustand befindet.

4. Verfahren nach einem der Ansprüche 2 oder 3, wobei der nicht-terrestrische Kommunikationstyp mindestens eines der folgenden umfasst:
einen geostationären Satelliten (1031), GEO, einen erdnahen Satelliten (1033), MEO, ein Szenario einer erdbeweglichen Bedienzelle auf Basis eines erdnahen Satelliten, LEO, ein Szenario einer erdgebundenen Bedienzelle auf Basis eines erdnahen Satelliten, LEO, oder eine Hochplattformstation, HAPS.

5. Verfahren nach einem der Ansprüche 1 bis 4, wobei die Zielmessung mindestens eines der folgenden umfasst:
ein Mobilitätsmanagement des Endgeräts (102), eine Funkverbindungsüberwachung, RLM, ein Funkressourcenmanagement, RRM, oder ein Strahlmanagement.

6. Messkonfigurationsverfahren, durchgeführt von einer Netzwerkvorrichtung (101), umfassend:
Senden (501), gemäß einem nicht-terrestrischen Kommunikationstyp, der der Netzwerkvorrichtung (101) entspricht, von ersten Skalierungsinformationen, die dem nicht-terrestrischen Kommunikationstyp entsprechen, an ein Endgerät (102), wobei die ersten Skalierungsinformationen verwendet werden, um Zeitbeschränkungsinformationen einer Zielmessung zu bestimmen; **dadurch gekennzeichnet, dass**
das Senden (501) der ersten Skalierungsinformationen, die dem nicht-terrestrischen Kommunikationstyp entsprechen, an das Endgerät (102) umfasst:
Senden einer Entsprechung zwischen mindestens einer Skalierungsinformation und mindestens einem nicht-terrestrischen Kommunikationstyp, die durch eine Spezifikation vereinbart ist, damit das Endgerät die ersten Skalierungsinformationen gemäß dem nicht-terrestrischen Kommunikationstyp des Endgeräts bestimmt.

7. Verfahren nach Anspruch 6, wobei die ersten Skalierungsinformationen in einem Systeminformationsblock, SIB, getragen werden, wenn sich das Endgerät in einem Leerlaufzustand oder einem inaktiven Zustand befindet; oder die ersten Skalierungsinformationen in einer Funkressourcensteuerungs-, RRC-, Signalisierung getragen werden, wenn sich das Endgerät in einem verbundenen Zustand befindet.

8. Verfahren nach Anspruch 6 oder 7, wobei der nicht-terrestrische Kommunikationstyp mindestens eines der folgenden umfasst:
einen geostationären Satelliten (1031), GEO, einen erdnahen Satelliten (1033), MEO, ein Szenario einer erdbeweglichen Bedienzelle auf Basis eines erdnahen Satelliten, LEO, ein Szenario einer erdgebundenen Bedienzelle auf Basis eines erdnahen Satelliten, LEO, oder eine Hochplattformstation, HAPS.

9. Verfahren nach einem der Ansprüche 6 bis 8, wobei die Zielmessung mindestens eines der folgenden umfasst:
ein Mobilitätsmanagement des Endgeräts, eine Funkverbindungsüberwachung, RLM, ein Funkressourcenmanagement, RRM, oder ein Strahlmanagement.

10. Messkonfigurationsvorrichtung (600), angewendet auf ein Endgerät, umfassend:
eine Verarbeitungseinheit (610), die konfiguriert ist, um erste Skalierungsinformationen zu erhalten, die einem nicht-terrestrischen Kommunikationstyp des Endgeräts entsprechen;
und ferner, um Zeitbeschränkungsinformationen einer Zielmessung basierend auf den ersten Skalierungsinformationen zu bestimmen; **dadurch gekennzeichnet, dass**
die Verarbeitungseinheit (610) ferner konfiguriert ist, um:
eine Entsprechung zwischen mindestens einer Skalierungsinformation und mindestens einem nicht-terrestrischen Kommunikationstyp zu erhalten, die durch eine Spezifikation vereinbart ist; und
die ersten Skalierungsinformationen gemäß dem nicht-terrestrischen Kommunikationstyp des Endgeräts zu bestimmen.

11. Vorrichtung (600) nach Anspruch 10, wobei die Verarbeitungseinheit (610) konfiguriert ist, um:
die von einer Netzwerkvorrichtung gesendeten ersten Skalierungsinformationen zu empfangen.

12. Messkonfigurationsvorrichtung (700), angewendet auf eine Netzwerkvorrichtung (101), umfassend:
eine Sende-/Empfangseinheit (710), die konfiguriert ist, um gemäß einem nicht-terrestrischen Kommunikationstyp, der der Netzwerkvorrichtung entspricht, erste Skalierungsinformationen, die dem nicht-terrestrischen Kommunikationstyp entsprechen, an ein Endgerät zu senden, wobei die ersten Skalierungsinformationen verwendet werden, um Zeitbeschränkungsinformationen einer Zielmessung zu bestimmen; **dadurch gekennzeichnet, dass**
die Sende-/Empfangseinheit (710) ferner konfiguriert ist, um:
eine Entsprechung zwischen mindestens einer Skalierungsinformation und mindestens einem nicht-terrestrischen Kommunikationstyp zu senden, die durch eine Spezifikation vereinbart ist, damit das Endgerät die ersten Skalierungsinformationen gemäß dem nicht-terrestrischen Kommunikationstyp des Endgeräts bestimmt.

13. Computerlesbares Speichermedium, das Computeranweisungen speichert, wobei bei Ausführung der Anweisungen das Verfahren nach einem der Ansprüche 1 bis 5 oder das Verfahren nach einem der Ansprüche 6 bis 9 implementiert wird.

## Revendications

1. Procédé de configuration de mesure, exécuté par un terminal (102), comprenant :
l'obtention (201), à partir d'un dispositif de réseau (101), de premières informations de mise à l'échelle correspondant à un type de communication non terrestre du terminal ; et
la détermination (202) d'informations de restriction temporelle d'une mesure cible sur la base des premières informations de mise à l'échelle ; **caractérisé en ce que** :
l'obtention (201) des premières informations de mise à l'échelle correspondant au type de communication non terrestre du terminal comprend :
l'obtention (401) d'une correspondance entre au moins une information de mise à l'échelle et au moins un type de communication non terrestre convenu par une spécification ; et
la détermination (402) des premières informations de mise à l'échelle en fonction du type de communication non terrestre du terminal.

2. Procédé selon la revendication 1, dans lequel l'obtention des premières informations de mise à l'échelle correspondant au type de communication non terrestre du terminal comprend :
la réception (301) des premières informations de mise à l'échelle envoyées par un dispositif de réseau (101).

3. Procédé selon la revendication 2, dans lequel, en réponse au fait que le terminal est dans un état inactif ou un état inactif, les premières informations de mise à l'échelle sont transportées dans un bloc d'informations système, SIB ; ou en réponse au fait que le terminal est dans un état connecté, les premières informations de mise à l'échelle sont transportées dans une signalisation de contrôle des ressources radio, RRC.

4. Procédé selon l'une des revendications 2 ou 3, dans lequel le type de communication non terrestre comprend au moins l'un des éléments suivants :
un satellite géostationnaire (1031), GEO, un satellite en orbite moyenne (1033), MEO, un scénario de cellule de desserte mobile basée sur un satellite en orbite basse (LEO), un scénario de cellule de desserte fixe basée sur un satellite LEO, ou une station de plateforme à haute altitude, HAPS.

5. Procédé selon l'une des revendications 1 à 4, dans lequel la mesure cible comprend au moins l'une des opérations suivantes :
une gestion de la mobilité du terminal (102), une surveillance de liaison radio, RLM, une gestion des ressources radio, RRM, ou une gestion de faisceau.

6. Procédé de configuration de mesure, exécuté par un dispositif de réseau (101), comprenant :
l'envoi (501), en fonction d'un type de communication non terrestre correspondant au dispositif de réseau (101), de premières informations de mise à l'échelle correspondant au type de communication non terrestre à un terminal (102), les premières informations de mise à l'échelle étant utilisées pour déterminer des informations de restriction temporelle d'une mesure cible ; **caractérisé en ce que** :
l'envoi (501) des premières informations de mise à l'échelle correspondant au type de communication non terrestre au terminal (102) comprend :
l'envoi d'une correspondance entre au moins une information de mise à l'échelle et au moins un type de communication non terrestre convenu par une spécification, afin que le terminal détermine les premières informations de mise à l'échelle en fonction du type de communication non terrestre du terminal.

7. Procédé selon la revendication 6, dans lequel, en réponse au fait que le terminal est dans un état inactif ou un état inactif, les premières informations de mise à l'échelle sont transportées dans un bloc d'informations système, SIB ; ou en réponse au fait que le terminal est dans un état connecté, les premières informations de mise à l'échelle sont transportées dans une signalisation de contrôle des ressources radio, RRC.

8. Procédé selon la revendication 6 ou 7, dans lequel le type de communication non terrestre comprend au moins l'un des éléments suivants :
un satellite géostationnaire (1031), GEO, un satellite en orbite moyenne (1033), MEO, un scénario de cellule de desserte mobile basée sur un satellite en orbite basse (LEO), un scénario de cellule de desserte fixe basée sur un satellite LEO, ou une station de plateforme à haute altitude, HAPS.

9. Procédé selon l'une des revendications 6 à 8, dans lequel la mesure cible comprend au moins l'une des opérations suivantes :
une gestion de la mobilité du terminal, une surveillance de liaison radio, RLM, une gestion des ressources radio, RRM, ou une gestion de faisceau.

10. Appareil de configuration de mesure (600), appliqué à un terminal, comprenant :
une unité de traitement (610), configurée pour obtenir des premières informations de mise à l'échelle correspondant à un type de communication non terrestre du terminal ;
et en outre pour déterminer des informations de restriction temporelle d'une mesure cible sur la base des premières informations de mise à l'échelle ; **caractérisé en ce que** :
l'unité de traitement (610) est en outre configurée pour :
obtenir une correspondance entre au moins une information de mise à l'échelle et au moins un type de communication non terrestre convenu par une spécification ; et
déterminer les premières informations de mise à l'échelle en fonction du type de communication non terrestre du terminal.

11. Appareil (600) selon la revendication 10, dans lequel l'unité de traitement (610) est configurée pour :
recevoir les premières informations de mise à l'échelle envoyées par un dispositif de réseau.

12. Appareil de configuration de mesure (700), appliqué à un dispositif de réseau (101), comprenant :
une unité d'émission-réception (710), configurée pour envoyer, en fonction d'un type de communication non terrestre correspondant au dispositif de réseau, des premières informations de mise à l'échelle correspondant au type de communication non terrestre à un terminal, les premières informations de mise à l'échelle étant utilisées pour déterminer des informations de restriction temporelle d'une mesure cible ; **caractérisé en ce que** :
l'unité d'émission-réception (710) est en outre configurée pour :
envoyer une correspondance entre au moins une information de mise à l'échelle et au moins un type de communication non terrestre convenu par une spécification, afin que le terminal détermine les premières informations de mise à l'échelle en fonction du type de communication non terrestre du terminal.

13. Support de stockage lisible par ordinateur stockant des instructions informatiques, dans lequel, lorsque les instructions sont exécutées, le procédé selon l'une des revendications 1 à 5 ou le procédé selon l'une des revendications 6 à 9 est mis en œuvre.
